# FASCICULE DE BREVET EUROPEEN

(11) **EP 3 388 712 B1**
(45) Date de publication et mention de la délivrance du brevet: **11.08.2021**
(21) Numéro de dépôt: 17181131.8
(22) Date de dépôt: 13.07.2017
(51) Int. Cl.: F16H 1/28, F16H 57/033

(54) **TRAIN EPICYCLOÏDAL AVANTAGEUSEMENT POUR UN SYSTEME SERVOMOTEUR ET SYSTEME SERVOMOTEUR UTILISANT CE TRAIN EPICYCLOÏDAL**
PLANETENGETRIEBE, INSBESONDERE FÜR EIN SERVOMOTORENSYSTEM, UND SERVOMOTORENSYSTEM, DAS DIESES PLANETENGETRIEBE NUTZT
PLANETARY GEARSET, ADVANTAGEOUSLY FOR A SERVO SYSTEM, AND SERVO SYSTEM USING SAID PLANETARY GEARSET

(30) Priorité: 14.04.2017 FR 1753278
(43) Date de publication de la demande: 17.10.2018
(73) Titulaire: Bernard Controls, 95500 Gonesse (FR)
(72) Inventeur: LEPAN, Rémy, 60820 Boran-sur-Oise (FR); DENIS, Yoann, 77450 Montry (FR)
(74) Mandataire: Berger, Helmut

(56) Documents cités:
- EP-A1- 2 730 807
- CH-A- 351 841
- JP-A- 2016 020 730

## Description

L'invention concerne un train épicycloïdal avantageusement pour un système servomoteur, du type comprenant une pluralité de composants rotatifs montés selon au moins une configuration de montage dans un carter et destinés à produire un rapport de vitesse entre l'organe d'entrée et l'organe de sortie, qui est propre à cette configuration de montage, et un système servomoteur multitours pour l'entraînement d'un actionneur, tel qu'une vanne déplaçable entre une position d'ouverture et une position de fermeture d'une conduite, du type comprenant un moteur et un agencement mécanique de transmission de puissance à l'actionneur.

Dans les systèmes de ce type, il est connu de changer la vitesse par changement des réductions d'un dispositif roue/vis. Cette façon de procéder présente l'inconvénient d'être difficile à mettre en œuvre.

L'invention a pour but de pallier cet inconvénient.

Pour atteindre ce but, le train épicycloïdal selon l'invention est caractérisé en ce que les composants sont conçus pour permettre des changements de configuration de montage dont chacune produit un rapport de vitesse propre prédéterminé.

Selon l'invention, le train épicycloïdal est caractérisé en ce qu'il comprend, enfermé dans un carter entre l'organe d'entrée et de sortie un ensemble comportant un solaire, un porte-satellite porteur de satellites et une couronne, et en ce qu'une configuration de montage est changeable par blocage dans le carter d'au moins un des composants de l'ensemble précité.

Selon l'invention le train épicycloïdal est caractérisé en ce que chacun des trois composants de l'ensemble précité est susceptible d'être bloqué dans le carter par liaison à celui-ci.

Selon encore une autre caractéristique le train épicycloïdal est caractérisé en ce que les configurations de montage sont changeables par inversion du sens de montage dans le carter, de l'ensemble précité.

Selon encore une autre caractéristique le train épicycloïdal est caractérisé en ce que le solaire et la couronne sont conçus pour être montés chacun sur l'organe d'entrée et l'organe de sortie.

Selon encore une autre caractéristique le train épicycloïdal est caractérisé en ce que l'ensemble précité est axialement déplaçable dans le carter dans des positions axiales de blocage soit du solaire, soit du porte-satellite, soit de la couronne.

Selon encore une autre caractéristique le train épicycloïdal est caractérisé en ce que le solaire et la couronne sont susceptibles d'être bloqués dans le carter par une liaison à une paroi du carter.

Selon encore une autre caractéristique le train épicycloïdal est caractérisé en ce que le porte-satellite est susceptible d'être bloqué dans le carter par une liaison à la paroi cylindrique du carter.

Selon encore une autre caractéristique le train épicycloïdal est caractérisé en ce que les organes d'entrée et de sortie sont identiques et comportent, axialement décalés des moyens de solidarisation en rotation du solaire et de la couronne qui sont également pourvus de moyens de solidarisation en rotation différents, axialement décalés, pour permettre des solidarisations en rotation dans des positions axiales différentes sur les organes d'entrée et de sortie.

Selon encore une autre caractéristique le train épicycloïdal est caractérisé en ce que les organes d'entrée et de sortie (66) sont différents.

Le système servomoteur multitours pour l'entraînement d'un actionneur tel qu'une vanne déplaçable entre une position d'ouverture et une position de fermeture d'une conduite, du type comprenant un moteur et un agencement mécaniques de transmission de puissance à un actionneur, qui comporte des moyens de changement du rapport des vitesses entre l'entrée et la sortie vers l'actionneur, et caractérisé en ce que les moyens de changement du rapport de vitesses sont formés par un train épicycloïdal selon l'invention.

Selon une caractéristique avantageuse de l'invention le système servomoteur est caractérisé en ce que l'agencement mécanique précité comprend le train épicycloïdal réalisé sous forme d'une unité séparée facilement accessible et en ce que le restant de l'agencement comporte un dispositif réducteur du type à vis et roue et qui est disposé dans un compartiment lubrifié.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
- La figure 1 est une vue synoptique fonctionnelle d'un système servomoteur selon l'invention ;
- la figure 2 est une vue en perspective du système de la figure 1 ;
- la figure 3 est une vue en coupe axiale d'un premier mode de réalisation du train épicycloïdal selon l'invention, montrant celui-ci dans une première configuration de montage de ses composants constitutifs ;
- la figure 4 est une vue de dessus du train épicycloïdal de la figure 3 ;
- les figures 5 à 9 sont des vues axiales du train épicycloïdal selon l'invention, montrant celui-ci dans cinq autres configurations de montage des composants constitutifs, différentes de celles de la figure 3 ;
- la figure 10 est une vue en perspective du manchon du train épicycloïdal des figures 3 à 9, indiquées par la référence 15 sur les figures 3 à 9 ;
- la figure 11 est une vue en coupe axiale du manchon de la figure 10 ;
- la figure 12 est une vue en coupe axiale de la couronne du train épicycloïdal des figures 3 à 9, identifiée par le numéro de référence 26 ;
- la figure 13 est une vue en perspective de la couronne de la figure 12 ;
- la figure 14 est une vue à plus grande échelle du détail entouré par le cercle XIV sur la figure 13 ;
- la figure 15 est une vue en coupe axiale du solaire du train épicycloïdal selon l'invention, désigné sur les figures 3 à 9 par le numéro de référence 20 ;
- les figures 16 à 21 sont des vues en coupe axiale de six différentes configurations de montage d'un deuxième mode de réalisation du train épicycloïdal selon l'invention ;
- les figures 22 et 23 sont deux vues en coupe axiale des deux manchons du deuxième mode de réalisation du train épicycloïdal selon l'invention ;
- la figure 24 est une vue en perspective d'un train épicycloïdal selon l'invention, avec le carter en partie découpé ;
- la figure 25 est une vue en perspective des composants d'un train épicycloïdal selon l'invention, sans le cadre.

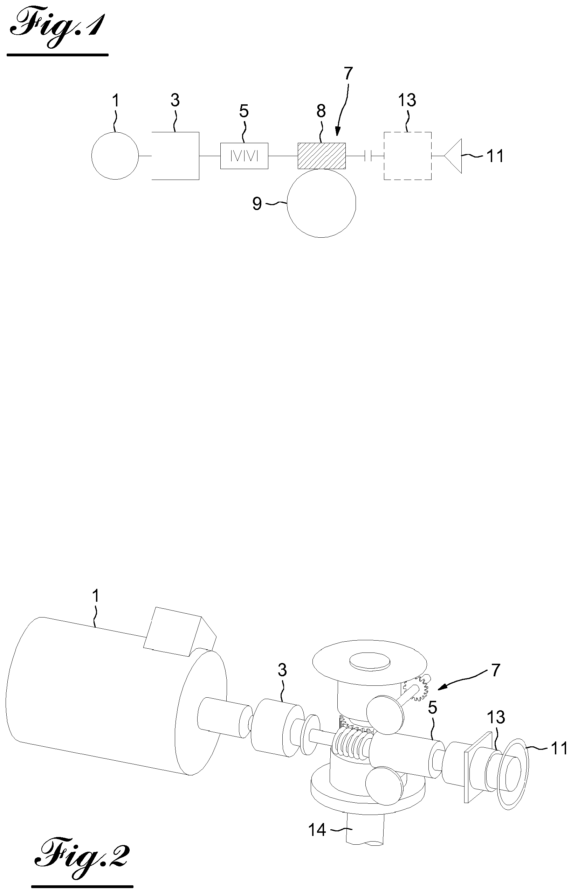

Les figures 1 et 2 montrent, sous forme d'un schéma synoptique fonctionnel un système servomoteur multitours selon l'invention, qui comprend, montés en série, un moteur 1, un train épicycloïdal 3, un limiteur d'efforts 5 et un dispositif réducteur 7 comportant une vis 8 et une roue 9 qui engrène la vis 8, est solidaire en rotation de l'arbre de sortie 14 du système et destiné à entraîner un dispositif ou organe de travail tel que par exemple une vanne de fermeture et d'ouverture d'un conduit (non représentée). La figure montre en outre, également montés en série avec la vis 8, un volant 11 d'actionnement manuel de l'actionneur et un système d'embrayage 13. Sur la figure 2, le limiteur d'effort est placé entre le dispositif réducteur 7 et le système d'embrayage 13.

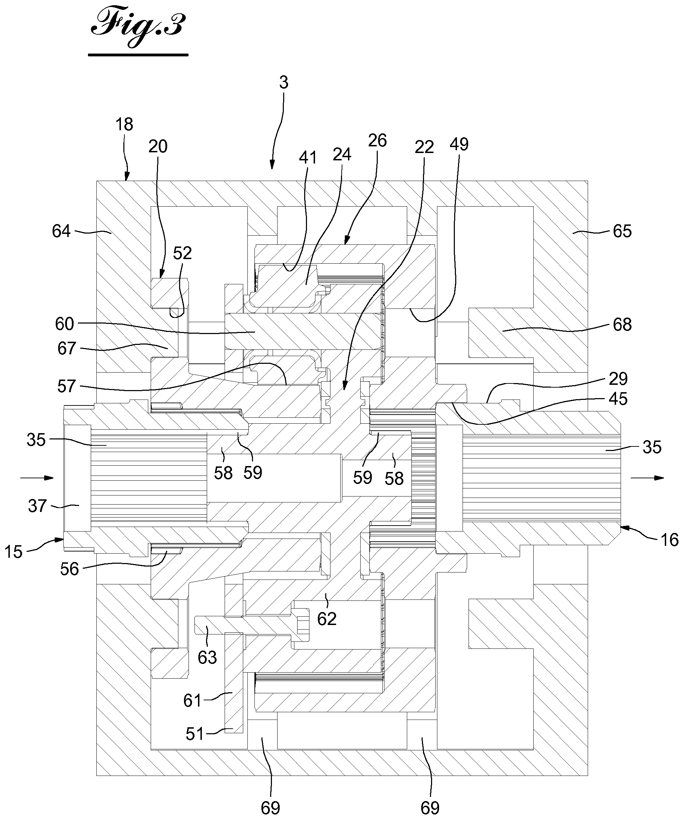

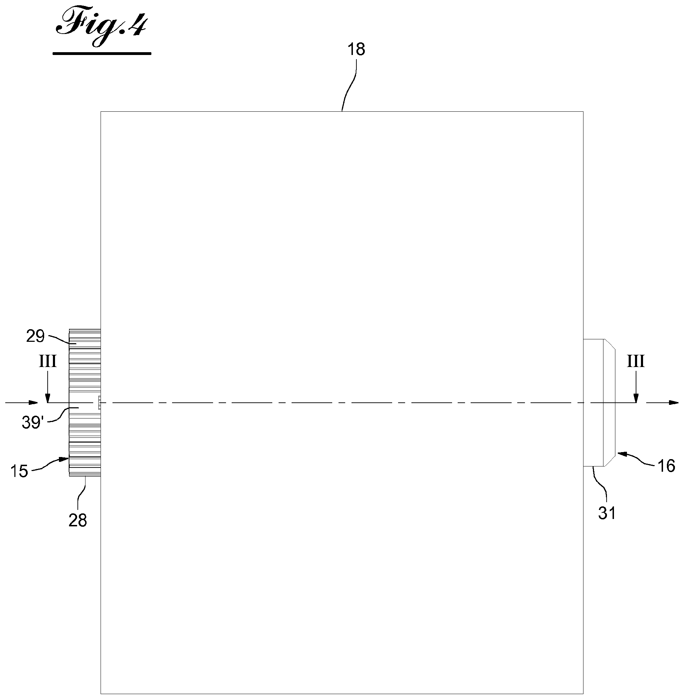

Comme le montre par exemple la figure 3, le train épicycloïdal 3 selon l'invention comporte essentiellement un manchon d'entrée 15 et un manchon de sortie 16, qui constituent les organes respectivement d'entrée et de sortie et sont montés dans un carter 18 qui enferme un solaire 20, un porte-satellite 22 porteur des satellites 24 et une couronne 26. Dans le premier mode de réalisation selon les figures 3 à 9, les manchons d'entrée 15 et de sortie 16 sont identiques. Les flèches indiquent la direction de transmission du couple produit par le moteur, le manchon d'entrée 15 étant situé du côté moteur.

On décrira tout d'abord les différents composants du système.

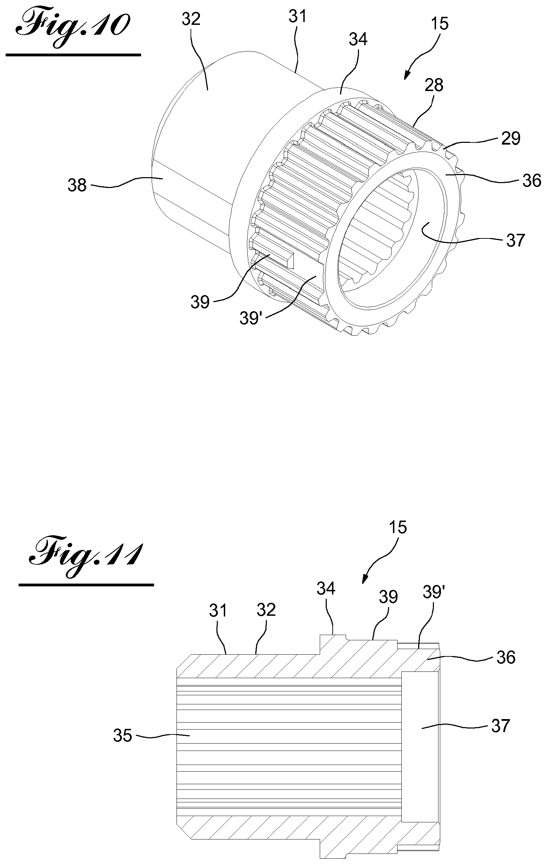

Les figures 10 et 11 illustrent le manchon d'entrée 15 identique au manchon de sortie 16. Le manchon 15 est réalisé sous forme d'un corps tubulaire qui comprend, successivement dans la direction axiale, d'une extrémité à l'autre, une partie 28 pourvue sur sa face extérieure des cannelures axiales 29 et une partie 31 dont la surface extérieure 32 est lisse et qui est séparée de la partie 8 par une collerette 34. Le diamètre de la surface périphérique 32 est plus faible que le diamètre de la surface périphérique de la partie 28. La surface intérieure du manchon 15 est axialement cannelée en 35 sauf sur la partie d'extrémité 36 de la partie 28 dont la face intérieure 37 est lisse. Deux des cannelures 29, diamétralement opposées et notées 39 sont tronquées et ces cannelures sont omises en 39' dans la portion de périphérie au-dessus de la partie de surface intérieure d'extrémité lisse 37.

Les références 38 indiquent deux guides de montage diamétralement opposés situés dans le prolongement des cannelures tronquées.

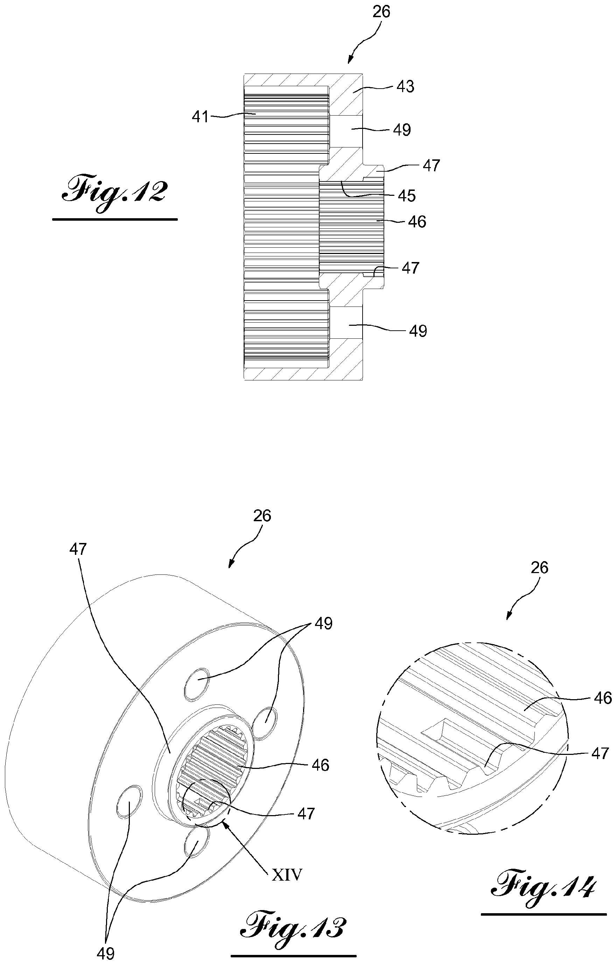

La couronne telle que représentée aux figures 12 à 14 est en forme d'un corps cylindrique creux dont la surface cylindrique interne est dentée en 41 et fermée à une extrémité par une paroi radiale 43 qui présente dans sa partie centrale un passage 45 qui est axialement prolongé par un embout 47. La surface interne du passage et de l'embout est pourvue de cannelures 46 sauf à deux endroits radialement opposés où les cannelures ont été omises et seulement réalisées en 47 dans la surface interne de l'embout. D'autre part, la paroi radiale 43 est percée de quatre trous 49 qui sont répartis de façon angulairement équidistante autour de l'embout.

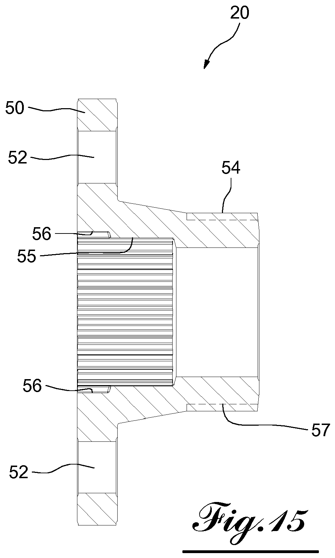

La figure 15 représente le solaire 20 qui est réalisé sous forme d'un corps tubulaire pourvu à une extrémité d'un flasque 50 qui comporte quatre trous 52 répartis de façon équidistante dans la direction périphérique. La surface cylindrique interne du solaire est lisse sur la moitié 54 qui est opposée au flasque 50 et cannelée sur l'autre moitié 55. Deux cannelures 56, situées diamétralement opposées sont tronquées. La surface extérieure périphérique de la moitié 54 intérieurement lisse est pourvue d'une denture 57.

Concernant le porte-satellite 22, ses parties d'extrémité 58 sont cannelées sur leur surface périphérique extérieure en 59 et les trois satellites 24 sont portés chacun par un axe 60 supporté par une plaque radiale 61 fixée sur la partie de support 62 du porte-satellite par des vis 63.

Il est encore à noter que les parois radiales d'extrémité 64, 65 du carter 18 portent sur leur surface axialement interne des plots cylindriques respectivement 67, 68 qui sont destinées à coopérer avec les trous 49 et 52 du solaire et de la couronne. Ces plots sont donc répartis de façon équidistante dans la direction périphérique les uns des autres.

Après la description des différents composants du train épicycloïdal on décrit ci-après les six différentes configurations de montage de ce train, qui permettent de changer la vitesse de l'arbre de sortie 14 du système servomoteur sans avoir à changer le dispositif réducteur 7 à vis 8 et roue 9.

Dans la configuration de montage selon la figure 3, le solaire 20 est bloqué puisque les plots 67 du carter s'engagent dans les trous 52 du solaire. Le manchon d'entrée 15 est solidarisé en rotation du porte-satellite 22 du fait que ses cannelures 35 et les cannelures 59 de l'extrémité adjacente 58 du porte-satellite sont en engagement mutuel. Les satellites 24 portés par le porte-satellite 22 engrainent la denture 57 du solaire et sont en engagement avec la denture 41 de la couronne qui, elle, est solidarisée du manchon de sortie 16 par engagement mutuel des cannelures 29 du manchon et des cannelures 45 de la couronne. Ainsi l'entraînement en rotation du manchon d'entrée 15 provoque la rotation du manchon de sortie 16. Il est à noter que ces deux manchons sont identiques mais seulement montés dans le train épicycloïdal dans des sens inverses.

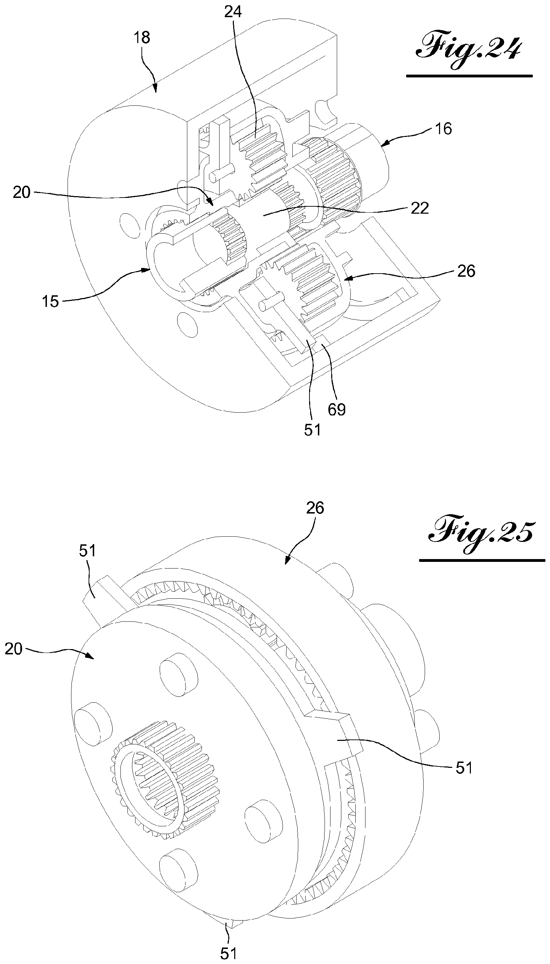

Les vues en perspective des figures 24 et 25 permettent de faciliter la compréhension de la description qui précède. On voit sur ces figures que le porte-satellite 22 comprend à sa périphérie des pattes de blocage 51 qui sont destinées à coopérer avec les éléments de butée 69 sur la face cylindrique intérieure du carter 18 de la manière qui sera décrite plus loin. Les plots de blocage du solaire et de la couronne sont sur ces figures prévus sur ces composants et non pas sur le carter comme sur la figure 3.

Dans la configuration de montage de la figure 3, par exemple pour une vitesse du moteur de 1400 rpm et une réduction vis/roue du dispositif 7, la vitesse à la sortie du système, c'est-à-dire de l'axe de sortie, 14 est de 146 rpm.

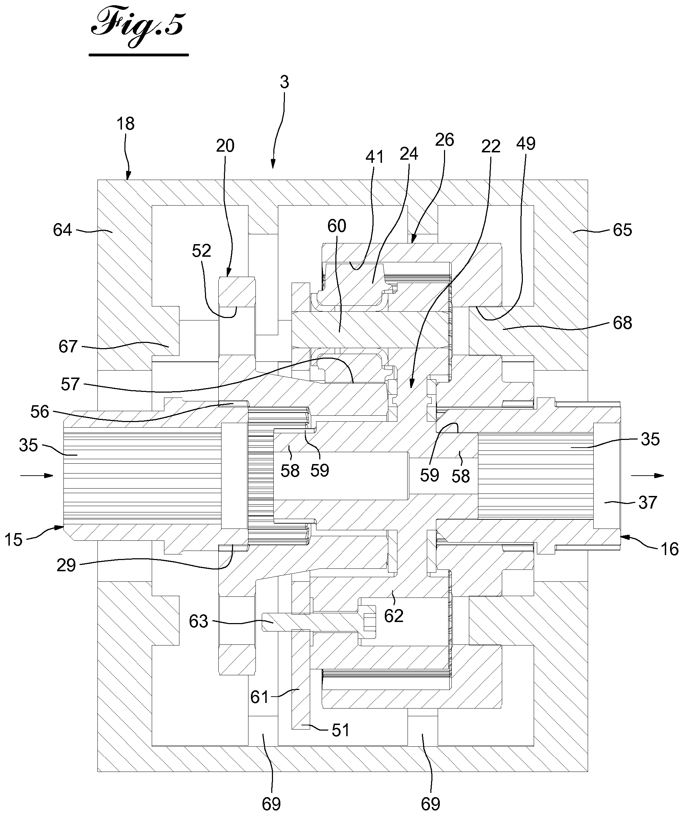

Dans la configuration de la figure 5, c'est la couronne 26 qui est bloquée puisque les plots 68 du carter s'engagent dans les trous 45 de la couronne. L'ensemble formé par la couronne, le porte-satellite et le solaire est axialement décalé vers la droite, par rapport à la configuration de montage de la figure 3 et le solaire est donc dégagé des plots 67 du carter. Par rapport à la figure 3, le manchon d'entrée 15 est orienté inversement et c'est maintenant la partie pourvue des cannelures 29 qui se trouve à l'intérieur du carter et est engagée par ces cannelures dans les cannelures tronquées 56 du solaire ainsi solidarisé en rotation du manchon d'entrée 15. La denture 57 du solaire engrainant la denture des satellites 24, le porte-satellite 22 est entraîné en rotation lorsque le manchon 15 et le solaire 20 tournent. Etant donné que les cannelures 59 de l'extrémité 58 située du côté sortie sont en engagement avec les cannelures internes 35 du manchon de sortie 16, celui-ci est donc entraîné en rotation par le porte-satellite. On constate que sa position dans le carter 18 est inversé par rapport à la figure 3.

Dans le cas de la configuration de montage des composants de la figure 5, en comparaison à la configuration de montage de la figure 3, pour la même vitesse de rotation du moteur et la même réduction du dispositif 7 à vis et roues, la vitesse de sortie du système, à savoir de l'axe de sortie 14 du système, est de 30 rpm par rapport à la valeur de 146 rpm de la figure 3.

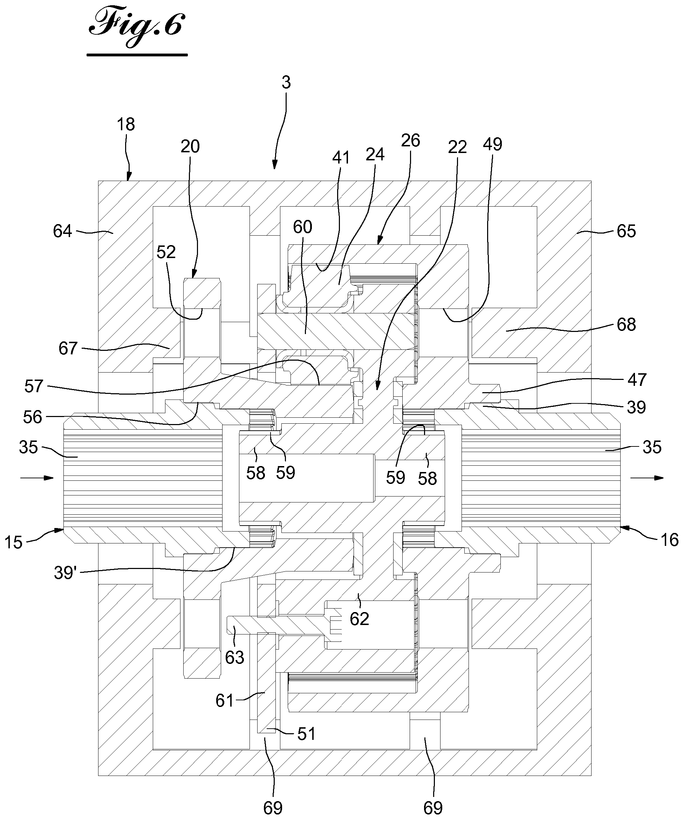

La figure 6 montre une troisième configuration de montage dont la particularité réside dans le fait que c'est le porte-satellite qui est bloqué. L'ensemble formé par le porte-satellite et la couronne est situé entre les plots de blocage 67 et 68 du carter. Dans cette position de l'ensemble, les pattes de blocage 51 du porte-satellite sont en butée contre les éléments de butée 69 du carter, ce qui immobilise le porte-satellite. Le manchon d'entrée est orienté comme dans le cas de la figure 5, mais le solaire 20 est solidarisé en rotation de ce manchon par l'engagement mutuel de ses cannelures internes 55 avec les cannelures extérieures 29 et les cannelures tronquées 39 du manchon, les cannelures tronquées 56 assurant la position axiale correcte du solaire sur le manchon. Ainsi la rotation du manchon 15 provoque la rotation du solaire 20. Le porte-satellite étant bloqué, le solaire entraîne en rotation les satellites 24 par engagement de sa denture 57 dans la denture des satellites qui, à leur tour, provoquent la rotation de la couronne 26 qui fait tourner le manchon de sortie 16 par engagement des cannelures 29 du manchon 16 dans les cannelures 45 de la couronne.

La configuration du montage du train épicycloïdal selon la figure 6 permet d'obtenir une vitesse de rotation de l'arbre de sortie 14 vers l'actionneur de 43 rpm, pour la même vitesse du moteur, c'est-à-dire à l'entrée du train et à la même réduction du dispositif 7 à vis et roues que dans les cas des configurations des figures 3 et 5.

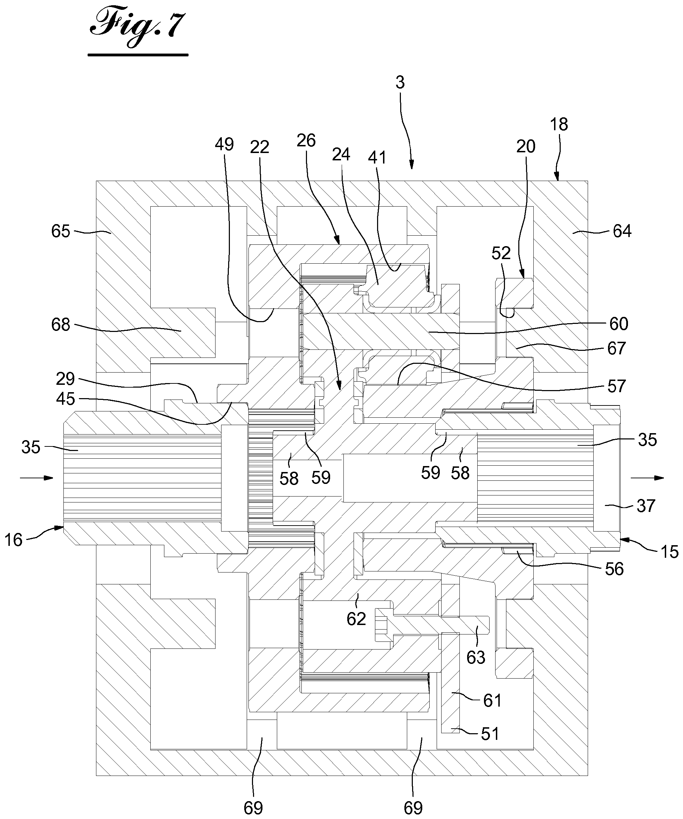

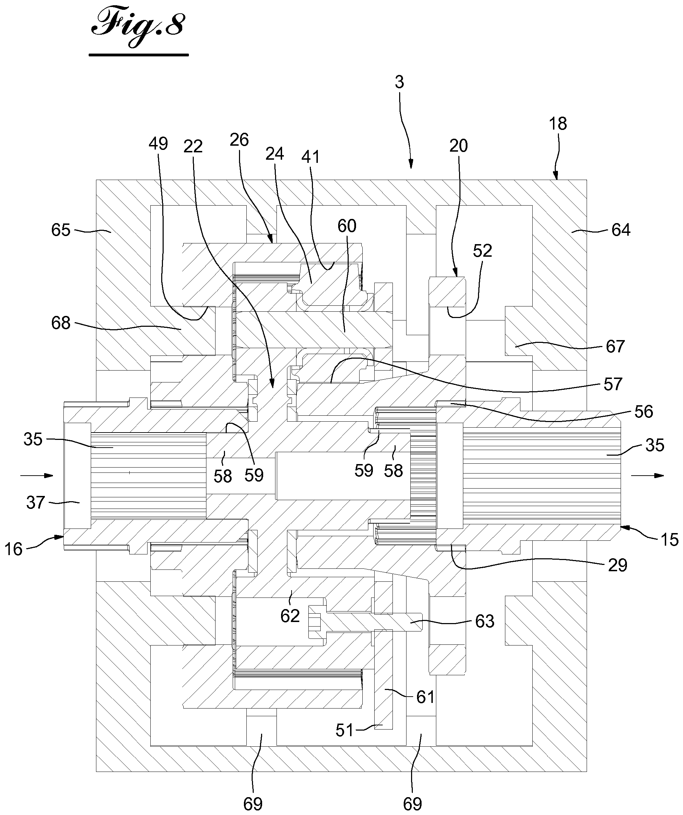

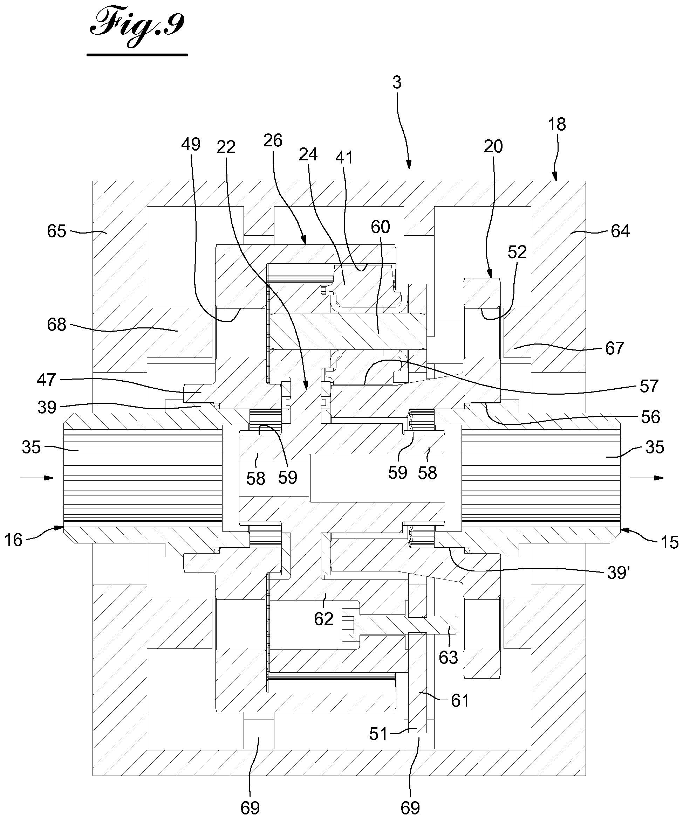

Les configurations des figures 7 à 9 correspondent respectivement aux configurations des figures 3, 5 et 6, mais le couple est transmis dans le sens inverse, c'est-à-dire les manchons de sortie 16 des figures 3, 5 et 6 constituent maintenant les manchons d'entrée. Autrement dit, ce sont les manchons 16 qui sont entraînés en rotation par le moteur et les manchons 15 des figures 3, 5 et 6 qui constituent les sorties du train épicycloïdal. A la même vitesse moteur et à la même réduction que dans le cas des configurations des figures 3, 5 et 6, on obtienne les vitesses sortie actionneur de l'arbre de sortie 14 de respectivement 37 rpm pour la figure 7, de 178 rpm pour la figure 8 et de 126 rpm pour la figure 9.

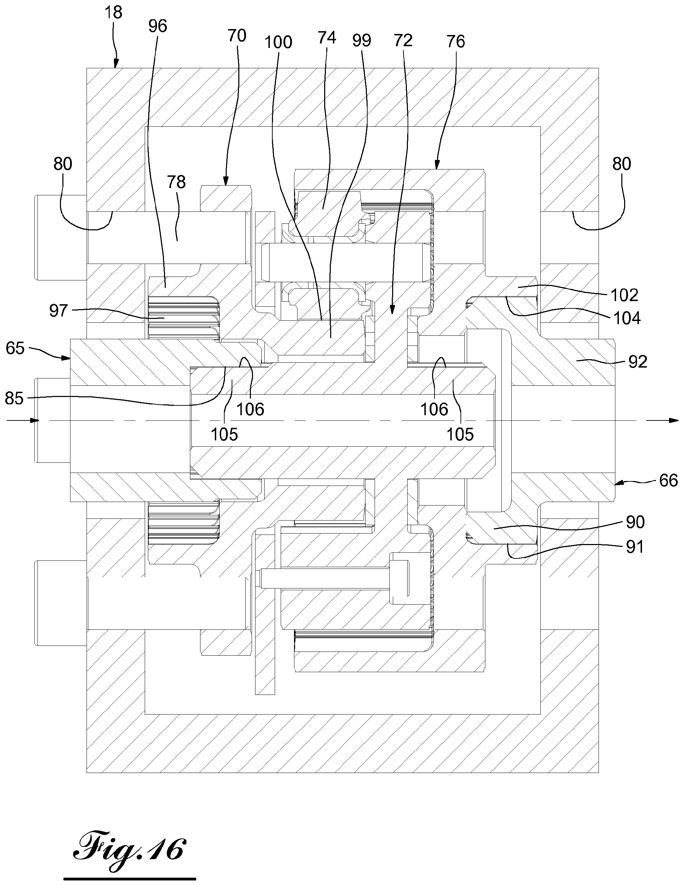

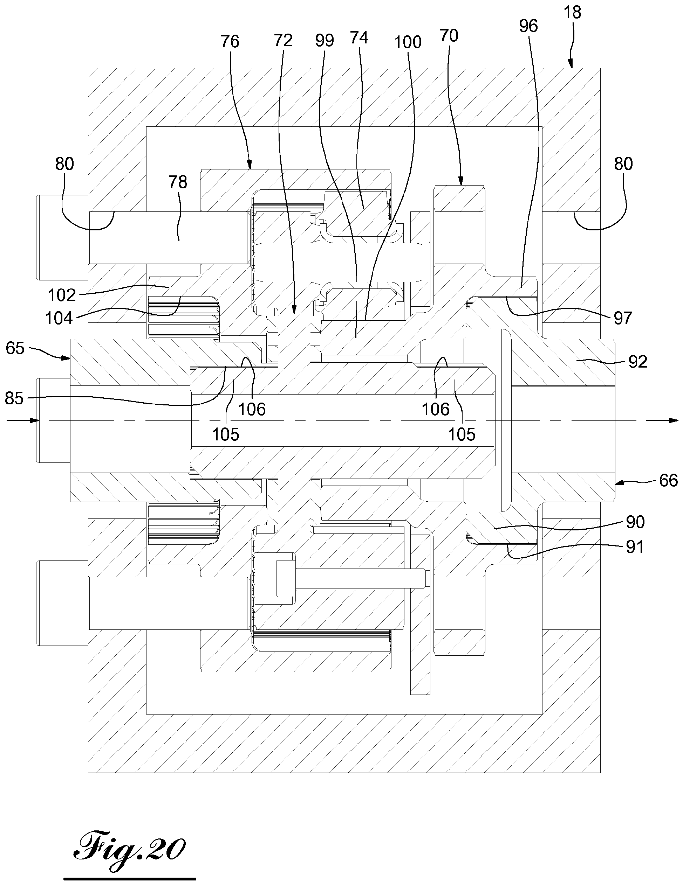

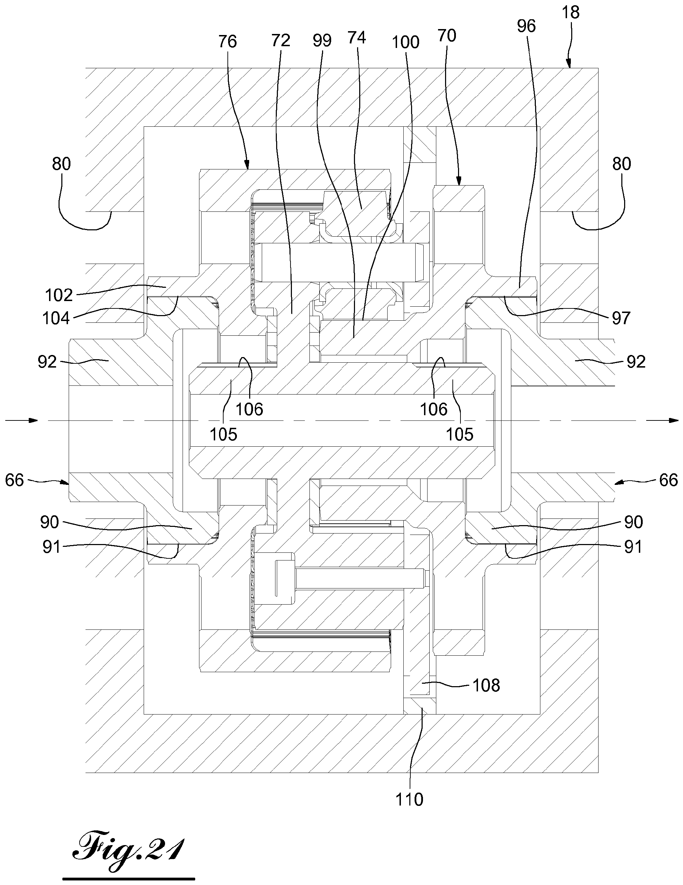

Les figures 16 à 23 montrent un deuxième mode de réalisation du train épicycloïdal selon l'invention. Ce mode de réalisation présente la particularité, par rapport au premier mode de réalisation, que les manchons portant maintenant les références 65 et 66, le solaire et la couronne maintenant respectivement 70 et 76 ne présentent plus de cannelures tronquées. Le porte-satellite avec les satellites désignés maintenant par les références respectivement 72 et 74 est sensiblement le même que dans le premier mode de réalisation. Une autre différence réside dans le fait que le carter noté maintenant 68 ne présente plus de plots de blocage en saillie, mais que le blocage soit du solaire 70, soit de la couronne 76, est obtenu par introduction de goupilles de blocage 78 à travers des trous 80 pratiqués dans les parois frontales du boîtier 68 aux endroits des plots 67 et 68 du premier mode de réalisation.

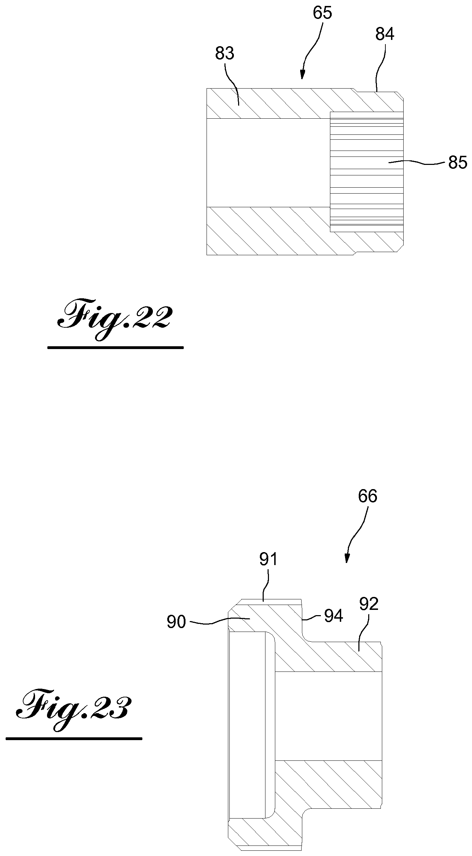

Dans ce mode de réalisation, comme le montre la figure 22, le manchon noté 65 est réalisé sous forme d'un corps tubulaire 83 dont une partie d'extrémité notée 84 est pourvue de cannelures intérieures axiales 85. Concernant le manchon 66, c'est un corps tubulaire de forme étagée, qui comprend une partie cylindrique 90 d'un plus grand diamètre et une partie 92 d'un diamètre plus faible ainsi qu'une partie intermédiaire radiale 94 reliant les parties 90 et 92. Les surfaces cylindriques périphériques extérieure et intérieure de la partie 90 sont cannelées. Les cannelures sont désignées respectivement par les références 91 et 93.

Il est encore à noter que, par rapport au solaire 20 du premier mode de réalisation, le solaire 70 comprend un embout annulaire cylindrique 96 dont la face interne est axialement cannelée, les cannelures étant désignées par la référence 97. L'embout 96 fait axialement saillie du côté opposé à la partie tubulaire 99 dont la surface extérieure est pourvue d'une denture 100 de façon à pouvoir engrainer la denture des satellites 74. L'embout tubulaire 96 présente un diamètre supérieur au diamètre de la partie 99 de façon que ses cannelures 97 puissent coopérer avec les cannelures 91 du manchon 66.

La couronne 76 de ce deuxième mode de réalisation comporte sur le côté opposé à celle de logement des satellites 74 un embout axial cylindrique 102 dont la surface intérieure est cannelée. Les cannelures 104 sont orientées dans le sens de l'axe de la couronne. Le diamètre intérieur de la partie cannelée correspond au diamètre extérieur du manchon 66 pour que les cannelures 104 et 91 de l'embout et du manchon puissent mutuellement s'engager les unes dans les autres.

Les figures 16 à 21 illustrent six configurations de montage différentes des composants du train épicycloïdal, à savoir des manchons, du solaire, du porte satellites avec ses satellites et de la couronne, qui correspondent aux six configurations des figures 3, 5 à 9 du premier mode de réalisation du train épicycloïdal.

Sur la figure 16, un manchon 65 est utilisé comme manchon d'entrée. Le solaire 70 est bloqué sur le carter par une goupille 78. Par conséquent le porte-satellite 70 est entraîné en rotation par engagement mutuel des cannelures 85 du manchon 65 et des cannelures 106 de la partie d'extrémité adjacente portant maintenant la référence 105 du porte-satellite qui, de son côté, entraîne en rotation par l'intermédiaire de ses satellites 74 la couronne 76 qui est solidaire en rotation du manchon de sortie 66 par engagement mutuel des cannelures 91 et des cannelures 104 sur la surface interne de l'embout tubulaire cylindrique axial 102 de la couronne.

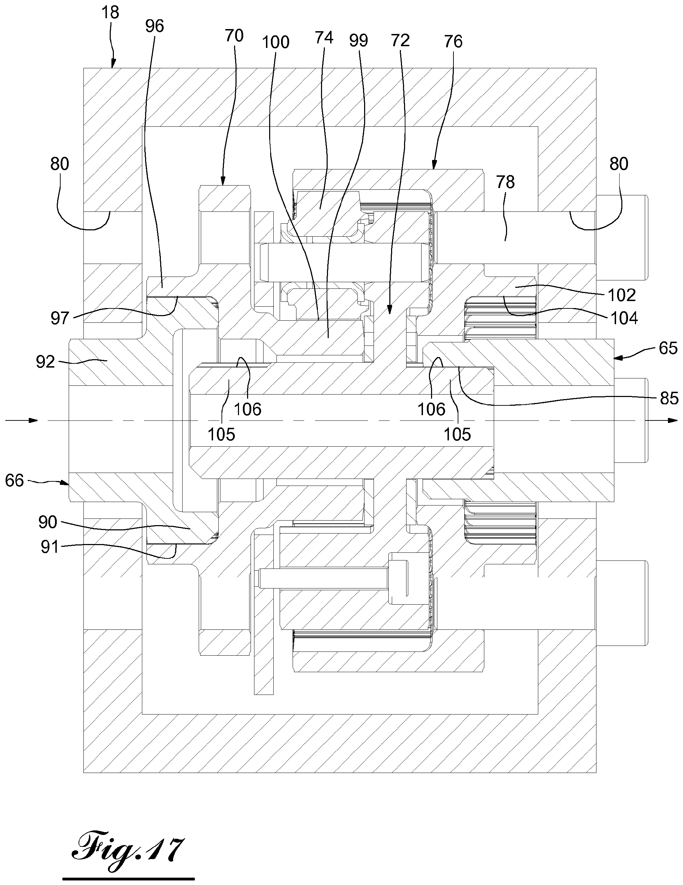

Dans la configuration de montage de la figure 17, c'est la couronne 76 qui est bloquée sur le carter par une goupille 78 et c'est le manchon 66 qui constitue le manchon d'entrée. Le mouvement de rotation du manchon d'entrée 66 est transmis au solaire 70 par engagement des cannelures 97 du solaire et les cannelures 91 du manchon, puis par la denture 100 du solaire aux satellites 74 et par le porte-satellite 72 au manchon de sortie 65 dont les cannelures 85 sont engagées dans les cannelures 106 de la partie d'extrémité adjacente 105 du porte-satellite.

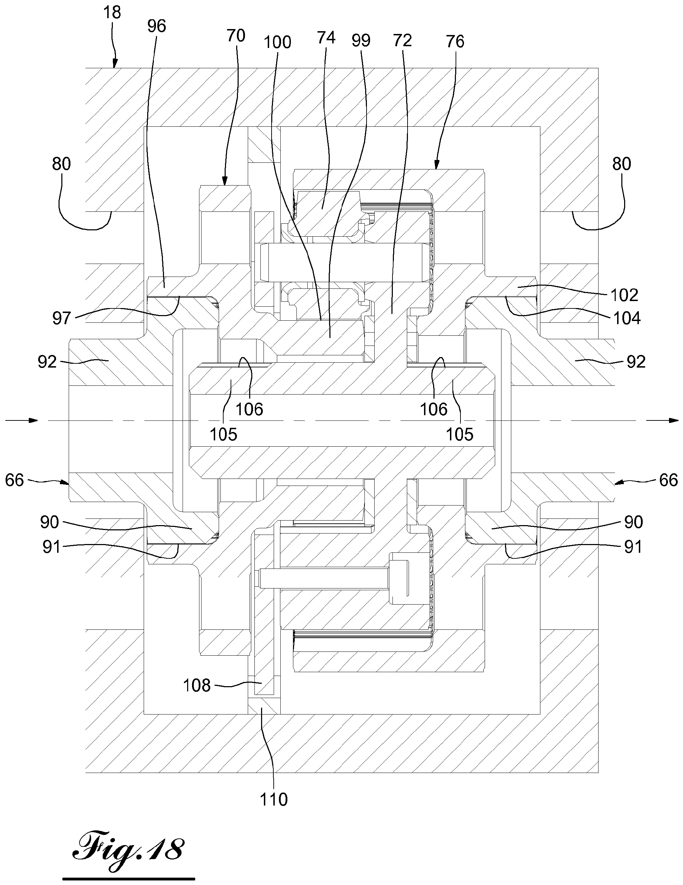

Dans la configuration de montage de la figure 18, on bloque le porte-satellite 72 grâce aux pattes de blocage 108 à la périphérie de celui-ci, qui sont en butée contre les éléments de butée 110 sur la surface cylindrique interne du carter. Le manchon 66 sert aussi bien de manchon d'entrée que de manchon de sortie. Le mouvement de rotation du manchon d'entrée 66 est transmis au solaire 70 comme dans la configuration de montage de la figure 17, puis du solaire aux satellites 74, de ceux-ci à la couronne 76 et de la couronne au manchon de sortie 66 par engagement mutuel des cannelures 104 de l'embout annulaire 102 et des cannelures 91 du manchon.

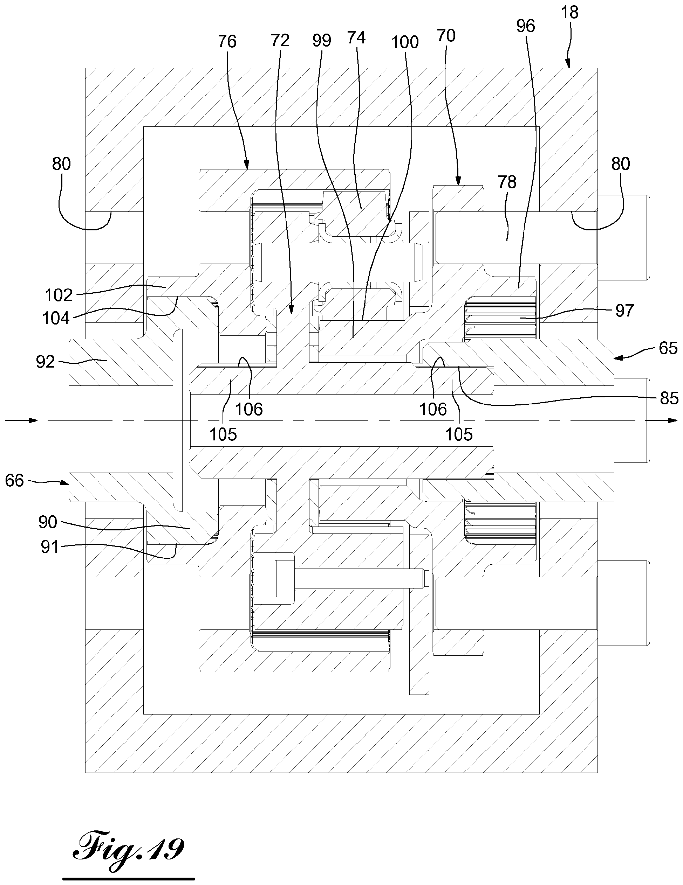

Dans le cas des configurations de montage des figures 19 à 21, la transmission du mouvement de rotation de l'entrée à la sortie du train épicycloïdal se fait de la manière inverse au sens de transmission des figures 16 à 18, les manchons de sortie servant de manchons d'entrée et les manchons d'entrée des figures 16 à 18 servant de manchons de sortie.

Etant donné que les composants du deuxième mode de réalisation correspondent à ceux du premier mode de réalisation, les vitesses de sortie du système correspondent à celles données plus haut pour le premier mode de réalisation.

Il ressort de la description des deux modes de réalisation du train épicycloïdal selon l'invention, qui a été uniquement donné à titre d'exemple et n'est donc pas limitative, que l'invention permet par des simples changements de configuration du montage du train épicycloïdal de changer la réduction et la vitesse du système servomoteur. Les différentes configurations de montage sont obtenues en changeant l'élément à bloquer, à savoir la couronne, le solaire, ou le porte-satellite, d'une part, et, d'autre part, en inversant le sens de montage du train, c'est-à-dire en inversant l'entrée et la sortie. Ainsi six configurations différentes permettent de réaliser six vitesses différentes de l'arbre de sortie côté actionneur, du système, pour la même vitesse du moteur et la même réduction au niveau du dispositif à vis et roue. Ainsi dans le cas de l'invention, au lieu de réaliser les différentes vitesses du système par des changements des réductions roue/vis, solution qui est préconisée dans l'état de la technique, l'invention permet d'obtenir cet objectif par des simples changements de la configuration du montage des composants du train épicycloïdal. Pour faciliter encore le changement des vitesses, le train épicycloïdal est réalisé sous forme d'un ensemble séparé qui est facilement accessible entre le moteur et le restant de l'agencement mécanique, comme le montrent les figures 1 et 2, qui peut alors être logé dans un compartiment lubrifié. Ainsi l'invention offre la possibilité avantageuse de changer la vitesse du système sans avoir à changer le dispositif à vis et roue et ainsi le couple roue/vis, simplement en changeant la configuration du train épicycloïdal qui est d'un accès facile, du fait qu'il est réalisé sous forme d'un sous-ensemble indépendant monté dans un carter d'une forme simple, avantageusement cylindrique dans lequel les composants constitutifs du train sont logés. De plus, en raison de leur forme simple et de leur montage à l'intérieur du boîtier, les changements des configurations des montages sont aisés à mettre en oeuvre.

Bien entendu, la description qui précède, des deux modes de réalisation de l'invention et de leurs représentations sur les figures, n'a été donnée à titre d'exemple et n'est pas limitative. Ainsi les composants peuvent être réalisés autrement sans changer le cadre de l'invention. Par exemple le train pourrait être réalisé en version polymère et en version métal fritté. On pourrait aussi envisager de prévoir les plots de blocage sur le solaire et la couronne et les trous de réception de ces plots dans les parois frontales du carter. Ce dernier n'est également réalisé sous la forme représentée qu'à titre d'exemple.

L'une des deux parois frontales et la paroi cylindrique pourraient être réalisées dans le carter du servomoteur, l'autre paroi frontale étant alors réalisée avec le flasque avant bridé du moteur électrique. D'autre part, le blocage du solaire et de la couronne ainsi que du porte-satellite pourrait être réalisé autrement. Ainsi, on pourrait envisager de bloquer le solaire et la couronne par une liaison radiale au carter.

## Revendications

1. Agencement mécanique de transmission de puissance, comportant des moyens de changement du rapport des vitesses, comprenant une pluralité de composants rotatifs pouvant être montés selon trois configurations alternatives de montage dans un carter et produisant des rapports de vitesses respectifs entre un organe de sortie et un organe d'entrée, déterminés par la configuration du montage, **caractérisé en ce que** les composants (15, 16, 20, 22, 24, 26; 65, 66, 70, 72, 74, 76) sont conçus pour permettre des changements de configuration de montage dont chacune produit un rapport de vitesses propre prédéterminé, les composants comprenant, entre l'organe d'entrée et l'organe de sortie (15, 16 ;65, 66) un ensemble d'un train épicycloidal comportant un solaire (20 ;70), un porte-satellite (22 ;72) porteur de satellites (24 ;74) et une couronne (26 ;76), les configurations de montage étant chacune atteignables par blocage vis à vis du carter respectivement du solaire, du porte-satellite ou de la couronne.

2. Agencement mécanique de transmission de puissance selon la revendication 1, **caractérisé en ce que** trois autres configurations de montage sont atteignables de plus par inversion du sens de montage dans le carter, de l'ensemble précité.

3. Agencement mécanique de transmission de puissance selon la revendication 1 ou la revendication 2, **caractérisé en ce que** le solaire (20 ;70) et la couronne (26 ;76) sont chacun conçus pour pouvoir être solidarisés par engagement mutuels de cannelures à l'organe d'entrée (15 ;65) ou l'organe de sortie (16 ; 66), qui sont des manchons d'entrée et de sortie.

4. Agencement mécanique de transmission de puissance selon la revendication 3, **caractérisé en ce que** l'ensemble précité est axialement déplaçable dans le carter (18 ;68) dans des positions axiales de blocage soit du solaire (20 ;70), soit du porte-satellite (22 ;72), soit de la couronne (26 ;76).

5. Agencement mécanique de transmission de puissance selon la revendication 4, **caractérisé en ce que** le solaire (20 ;70) et la couronne (26 ;76) sont susceptibles d'être bloqués dans le carter par une liaison (67, 68 ;78) à une paroi radiale d'extrémité (64, 65) du carter (18).

6. Agencement mécanique de transmission de puissance selon la revendication 5, **caractérisé en ce que** le porte-satellite (22 ;72) est susceptible d'être bloqué dans le carter (18 ;68) par une liaison (108, 110) à une paroi cylindrique du carter.

7. Agencement mécanique de transmission de puissance selon une des revendications 4 à 7, **caractérisé en ce que** les organes d'entrée (15) et de sortie (16) sont identiques et comportent, axialement décalés des moyens de solidarisation en rotation du solaire (20 ;72) et de la couronne (26 ;76), le solaire et la couronne étant également pourvus de moyens de solidarisation en rotation différents, axialement décalés, pour permettre des solidarisations en rotation dans des positions axiales différentes avec les organes d'entrée et de sortie.

8. Agencement mécanique de transmission de puissance selon l'une des revendications 1 à 3, **caractérisé en ce que** les organes d'entrée (65) et de sortie (66) sont différents.

9. Agencement mécanique de transmission de puissance selon l'une des revendications 1 à 3 ou 8, **caractérisé en ce que** le blocage soit du solaire (70) soit de la couronne (76) est obtenu par introduction de goupilles (78) de blocage à travers de trous (80) pratiqués dans les parois frontales du carter (68).

10. Système servomoteur multitours pour l'entraînement d'un organe de travail tel qu'une vanne déplaçable entre une position d'ouverture et une position de fermeture d'une conduite, du type comprenant un moteur et un agencement mécanique de transmission de puissance à un actionneur selon l'une des revendications 1 à 9.

11. Système servomoteur selon la revendication 10, **caractérisé en ce que** l'agencement mécanique précité comprend des moyens de changement du rapport des vitesses réalisés sous forme d'une unité séparée facilement accessible et **en ce que** le restant de l'agencement comporte un dispositif réducteur du type à vis (8) et roue (9) et est disposé dans un compartiment lubrifié.

## Patentansprüche

1. Mechanische Anordnung zur Leistungsübertragung, aufweisend Mittel zum Ändern des Geschwindigkeitsverhältnisses, umfassend eine Vielzahl rotierender Bauteile, die gemäß drei alternativen Montagekonfigurationen in ein Gehäuse einbaubar sind und jeweilige Geschwindigkeitsverhältnisse zwischen einem Ausgangsorgan und einem Eingangsorgan herstellen, die von der Montagekonfiguration bestimmt sind, **dadurch gekennzeichnet, dass** die Bauteile (15, 16, 20, 22, 24, 26; 65, 66, 70, 72, 74, 76) konstruiert sind, um Änderungen der Montagekonfiguration zu erlauben, von denen jede ein vorherbestimmtes eigenes Geschwindigkeitsverhältnis herstellt, wobei die Bauteile zwischen dem Eingangsorgan und dem Ausgangsorgan (12, 16; 65, 66) eine Anordnung eines Planetengetriebes umfassen, das ein Sonnenrad (20; 70), einen Planetenradträger (22; 72) als Träger von Planetenrädern (24; 74) und einen Kranz (26; 76) aufweist, wobei die Montagekonfigurationen jeweils durch Blockade gegenüber dem Gehäuse jeweils des Sonnenrads, des Planetenradträgers oder des Kranzes erreichbar sind.

2. Mechanische Anordnung zur Leistungsübertragung nach Anspruch 1, **dadurch gekennzeichnet, dass** durch Umkehrung der Montagerichtung im Gehäuse der vorgenannten Anordnung drei andere Montagekonfigurationen zusätzlich erreichbar sind.

3. Mechanische Anordnung zur Leistungsübertragung nach Anspruch 1 oder Anspruch 2, **dadurch gekennzeichnet, dass** das Sonnenrad (20; 70) und der Kranz (26; 76) konstruiert sind, um durch gegenseitiges Einsetzen von Rillen auf dem Eingangsorgan (15; 65) oder dem Ausgangsorgan (16; 66) fest verbunden werden zu können, die Eingangs- und Ausgangshülsen sind.

4. Mechanische Anordnung zur Leistungsübertragung nach Anspruch 3, **dadurch gekennzeichnet, dass** die vorgenannte Anordnung im Gehäuse (18; 68) in axiale Blockierpositionen entweder des Sonnenrads (20; 70) oder des Planetenradträgers (22; 72) oder des Kranzes (26; 76) axial verlagerbar ist.

5. Mechanische Anordnung zur Leistungsübertragung nach Anspruch 4, **dadurch gekennzeichnet, dass** das Sonnenrad (20; 70) und der Kranz (26; 76) im Gehäuse durch eine Verbindung (67, 68; 78) mit einer radialen Endwand (64, 65) des Gehäuses (18) blockierbar sind.

6. Mechanische Anordnung zur Leistungsübertragung nach Anspruch 5, **dadurch gekennzeichnet, dass** der Planetenradträger (22; 72) im Gehäuse (18; 68) von einer Verbindung (108, 110) mit einer zylindrischen Wand des Gehäuses blockierbar ist.

7. Mechanische Anordnung zur Leistungsübertragung nach einem der Ansprüche 4 bis 7, **dadurch gekennzeichnet, dass** das Eingangs- (15) und Ausgangsorgan (16) identisch sind und axial versetzt Drehverbindungsmittel des Sonnenrads (20; 72) und des Kranzes (26; 76) aufweisen, wobei das Sonnenrad und der Kranz ebenfalls mit unterschiedlichen, axial versetzten Drehverbindungsmitteln ausgestattet sind, um in unterschiedlichen axialen Positionen Drehverbindungen mit dem Eingangs- und Ausgangsorgan zu erlauben.

8. Mechanische Anordnung zur Leistungsübertragung nach einem der Ansprüche 1 bis 3, **dadurch gekennzeichnet, dass** das Eingangs- (65) und Ausgangsorgan (66) unterschiedlich sind.

9. Mechanische Anordnung zur Leistungsübertragung nach einem der Ansprüche 1 bis 3 oder 8, **dadurch gekennzeichnet, dass** die Blockade entweder des Sonnenrads (70) oder des Kranzes (76) durch Einführung von Blockierstiften (78) durch Löcher (80) erhalten wird, die in den Frontwänden des Gehäuses (18) ausgebildet sind.

10. Mehrfachumdrehungs-Servomotorsystem für den Antrieb eines Arbeitsorgans wie ein zwischen einer Öffnungsposition und einer Verschlussposition einer Leitung verlagerbares Ventil des Typs, der einen Motor und eine mechanische Anordnung zur Übertragung einer Leistung an einen Aktuator nach einem der Ansprüche 1 bis 9.

11. Servomotorsystem nach Anspruch 10, **dadurch gekennzeichnet, dass** die vorgenannte mechanische Anordnung Mittel zum Ändern des Geschwindigkeitsverhältnisses umfasst, die in Form einer separaten Einheit realisiert sind, die leicht zugänglich ist und dass die restliche Anordnung eine Getriebevorrichtung des Typs mit Schraube (8) und Rad (9) aufweist und in einem geschmierten Fach angeordnet ist.

## Claims

1. A mechanical arrangement for transmitting power, including means for changing the speed ratio, comprising a plurality of rotating components able to be mounted according to three alternative mounting configurations in a casing and producing respective speed ratios between an output member and an input member, determined by the mounting configuration, **characterized in that** the components (15, 16, 20, 22, 24, 26; 65, 66, 70, 72, 74, 76) are designed to allow changes in mounting configuration, each of which produces a specific predetermined speed ratio, the components comprising, between the input member and the output member (15, 16; 65, 66), an assembly of a planetary gearset including a sun gear (20; 70), a planet carrier (22; 72) carrying planet gears (24; 74) and a ring gear (26; 76), the mounting configurations each being achievable by blocking with respect to the casing respectively of the sun gear, the planet carrier or the ring gear.

2. The mechanical arrangement for transmitting power according to claim 1, **characterized in that** three other mounting configurations are also achievable by reversing the mounting direction, in the casing, of the aforementioned assembly.

3. The mechanical arrangement for transmitting power according to claim 1 or claim 2, **characterized in that** the sun gear (20; 70) and the ring gear (26; 76) are each designed to be able to be secured by mutual engagement of splines to the input member (15; 65) or the output member (16; 66), which are input and output sleeves.

4. The mechanical arrangement for transmitting power according to claim 3, **characterized in that** the aforementioned assembly is axially movable in the casing (18; 68) into axial blocking positions either of the sun gear (20; 70), or of the planet carrier (22; 72), or of the ring gear (26; 76).

5. The mechanical arrangement for transmitting power according to claim 4, **characterized in that** the sun gear (20; 70) and the ring gear (26; 76) can be blocked in the casing by a connection (67, 68; 78) to a radial end wall (64, 65) of the casing (18).

6. The mechanical arrangement for transmitting power according to claim 5, **characterized in that** the planet carrier (22; 72) can be blocked in the casing (18; 68) by a connection (108, 110) to a cylindrical wall of the casing.

7. The mechanical arrangement for transmitting power according to one of claims 4 to 7, **characterized in that** the input (15) and output (16) members are identical and include, axially offset, means for securing the sun gear (20; 72) and the ring gear (26; 76) in rotation, the sun gear and the ring gear also being provided with different, axially offset means for securing in rotation, in order to allow securing in rotation in different axial positions with the input and output members.

8. The mechanical arrangement for transmitting power according to one of claims 1 to 3, **characterized in that** the input (65) and output (66) members are different.

9. The mechanical arrangement for transmitting power according to one of claims 1 to 3 or 8, **characterized in that** the blocking either of the sun gear (70) or of the ring gear (76) is obtained by introducing blocking pins (78) through holes (80) formed in the front walls of the casing (18).

10. A multi-turn servomotor system for driving a working member such as a valve movable between an open position and a closed position of a conduit, of the type comprising a motor and a mechanical arrangement for transmitting power to an actuator according to one of claims 1 to 9.

11. The servomotor system according to claim 10, **characterized in that** the aforementioned mechanical arrangement comprises means for changing the speed ratio made in the form of an easily accessible separate unit and **in that** the remainder of the arrangement includes a reducing device of the screw (8) and wheel (9) type and is positioned in a lubricated compartment.
